# EUROPÄISCHE PATENTSCHRIFT

(11) **EP 1 979 200 B1**
(45) Veröffentlichungstag und Bekanntmachung des Hinweises auf die Patenterteilung: **26.10.2011**
(21) Anmeldenummer: 06819904.1
(22) Anmeldetag: 04.12.2006
(51) Int. Cl.: B60R 21/0132, B60R 21/01

(54) **VORRICHTUNG UND VERFAHREN ZUR ANSTEUERUNG VON PERSONENSCHUTZMITTELN BEI EINEM SEITENAUFPRALL**
DEVICE AND METHOD FOR THE ACTUATION OF PERSONAL PROTECTION MEANS IN THE EVENT OF A SIDE IMPACT
DISPOSITIF ET PROCÉDÉ POUR COMMANDER DES MOYENS DE PROTECTION D'OCCUPANTS D'UN VÉHICULE LORS D'UN IMPACT LATÉRAL

(30) Priorität: 20.01.2006 DE 102006002747
(43) Veröffentlichungstag der Anmeldung: 15.10.2008
(73) Patentinhaber: Robert Bosch GmbH, 70442 Stuttgart (DE)
(72) Erfinder: EWERHART, Frank, 74189 Weinsberg (DE); MARCHTHALER, Reiner, 73333 Gingen (DE); LICH, Thomas, 71409 Schwaikheim (DE); STABREY, Stephan, 70376 Stuttgart (DE)
(86) Internationale Anmeldenummer: PCT/EP2006/069280
(87) Internationale Veröffentlichungsnummer: WO 2007/087919

(56) Entgegenhaltungen:
- EP-A- 1 566 312
- WO-A-03/031236
- WO-A-2005/123460
- WO-A-2005/123462
- DE-A1-102005 038 227

## Beschreibung

### Stand der Technik

Die Erfindung betrifft eine Vorrichtung und ein Verfahren zur Ansteuerung von Personenschutzmitteln bei einem Seitenaufprall nach der Gattung der unabhängigen Patenansprüche.

Aus DE 198 11 865 A1 ist ein Verfahren zum Steuern des Betriebs von Kraftfahrzeuginsassenschutzeinrichtungen bekannt. Dabei werden Schwellwerte, die für die Auslösung der Insassenschutzeinrichtungen verwendet werden, in Abhängigkeit von einer Fahrzeuggeschwindigkeit, einer gemessenen Gierrate und einer gemessenen Querbeschleunigung verändert. Die Aktivierung eines Fahrdynamik-Sicherheitssystems führt beispielsweise dazu, dass die Insassenschutzeinrichtung aus ihrem Bereitschaftszustand, in dem die Eigendiagnose erfolgt, in den aktiven Zustand versetzt wird, in dem die Auslösealgorithmen aktiviert werden.

Aus WO 2004/094195 A1 ist es bekannt, dass Rückhaltemittel in Abhängigkeit von einem Schwellwertvergleich angesteuert werden, wobei der Schwellwert in Abhängigkeit von einem Signal einer Fahrdynamikregelung eingestellt wird. Das Signal von der Fahrdynamikregelung kann ein Reibwert oder ein Gefahrenmaß sein.

Aus DE 102 50 732 B3 ist eineSteuervorrichtung und ein Verfahren zur Ansteuerung eines Insassen- und/oder Partnerschutzmittels bekannt. Dabei werden die Insassen und/oder

Partnerschutzmittel präventiv angesteuert. Die Auslöseentscheidung wird dabei unter Berücksichtigung von Fahrdynamikgrößen gebildet. Auch eine Plausibilisierungsstufe zur Plausibilisierung der Auslöseentscheidung ist vorgesehen. Diese Plausibilisierungsstufe bewertet die Auslöseentscheidung als unplausibel und verhindert das Ansteuern des Insassen und/oder Partnerschutzmittels falls eine Bewertung des zeitlichen Verlaufs im Fahrzeug erfasster Größen, wie beispielsweise Lenkwinkel,

Pedalbetätigung, Gierrate oder Querbeschleunigung ergeben, dass das sicherheitskritische Fahrverhalten innerhalb vorgebbarer Grenzen einem Wunschfahrverhalten entspricht. Als Wunschfahrverhalten wird ein willkürlich und kontrolliert herbeigeführtes Fahrverhalten betrachtet.

Aus US 2004/0183281 A1 ist ein Seitenaufpralldetektionssyste bekannt, das einen Umfeldsensor und einen Sensor zur Erfassung eines Seitwärtsdrifts aufweist. Es wird ein Überwachungssignal für ein Unfallobjekt in Abhängigkeit der Annäherungsgeschwindigkeit des Objekts und des Seitwärtsdrifts des Fahrzeugs gebildet.

Aus WO 2005/123460 A2 ist eine Auslösung von Rückhaltemitteln anhand der Gierrate eines Fahrdynamikparametersatzes und eines Kontextparametersatzes bekannt, wobei der Schwimmwinkel aus der Gierrate und der Lateralgeschwindigkeit bestimmt wird.

Aus WO 03/031236 A ist es bekannt, den Schwimmwinkel, die Lateralgeschwindigkeit und einen Fahrzeugkippwinkel, der seinerseits aus der Fahrzeugquerbeschleunigung bzw. der Fahrzeugquergeschwindigkeit bestimmt wird, zur Auslösung von Rückhaltemitteln heranzuziehen. Zusätzlich kann noch ein Signal einer Insassensensierung verwendet werden.

Aus der gattungsbildenden WO 2005/123462 A1 ist es bekannt, aus der Lateralgschwindigkeit eine Crashschwere abzuleiten und damit die Auswertung eines Signals einer Seitenaufprallsensorik zu beeinflussen. Zusätzlich kann auch ein Schwimmwinkel berücksichtigt werden.

Aus EP 1 566 312 A2 ist es bekannt, aus einem Signal einer Unfallsensorik und einer Lateralgeschwindigkeit einen Seitenaufprall zu erkennen. Die Lateralgeschwindigkeit kann aus der Fahrdynamikregelung bestimmt werden und selber als Plausibilisierung für einen solchen Seitenaufprall dienen. Aus der Lateralgeschwindigkeit kann weiterhin über eine Schwellwertabfrage eine Unfallschwere bestimmt werden. Diese Unfallschwere beeinflusst die Schwellen für die Signale der Unfallsensorik.

### Offenbarung der Erfindung

Die erfindungsgemäße Vorrichtung und das erfmdungsgemäße Verfahren zur Ansteuerung von Personenschutzmitteln bei einem Seitenaufprall haben dem gegenüber Vorteile. Es ist bekannt, dass durch die Verwendung der Lateralgeschwindigkeit bei der Bildung der Auslöseentscheidung für die Personenschutzmittel, insbesondere durch die Beeinflussung der Schwellwerte; die zur Bildung der Auslöseentscheidung verwendet werden, ein zuverlässige und präzise und vor allem gut plausibilisierte Ansteuerung der Personenschutzmittel möglich ist.

Bekannt ist die Verwendung der Lateralgeschwindigkeit und/oder des Schwimmwinkels zur Modifikation bzw. Anpassung von Schwellwerten von bereits bestehenden Seitenalgorithmen. Anstatt die Schwellwerte zu verändern, kann auch das Signal, das mit den Schwellwerten verglichen wird, entsprechend verändert werden. Dabei kommen Aufprallsensoren als Geber für das Eingabesignal für die Algorithmen zum Einsatz. Als Aufprallsensoren kommen üblicher Weise in Frage: Druck- und/oder Beschleunigungs-, und/oder Körperschallsensoren zur Detektion des Seitenaufpralls.

Durch die Umsetzung dieses Vorchlags ergeben sich folgende Vorteile:
Bei einem Seitenaufprall müssen im Bereich von 4 - 10 msec nach dem Aufprall die Entscheidung zur Ansteuerung der Personenschutzmittel getroffen werden. Durch die Verwendung der Lateralgeschwindigkeit als Modifikationsfaktor kann in dem bestehenden Verfahren bzw. der Vorrichtung eine Schwellwertanpassung und/oder eine Herabsetzung einer vorgegebenen Kennlinie vorgenommen werden. Dadurch ergibt sich
im Fall eines seitlichen Abdriftens des Fahrzeugs gefolgt durch einen Aufprall, beispielsweise auf einen Pfahl oder einen Baum, eine verbesserte Auslöseperformance. Die Verbesserung liegt je nach Konfiguration im Bereich 1,5 - 4 msec. Dies ist prozentual gesehen eine Verbesserung von rund 40 - 50 %. Daher ist eine verbesserte Schutzwirkung hinsichtlich so genannter Pole- oder Pfahlcrashes zu erwarten, da hier der Anteil der Seitenaufprallunfälle bei rund 17 % liegt, wobei hier das Fahrzeug seitlich gegen ein Objekt dieser Größe rutscht und es zu einer seitlichen Kollision kommt.

Durch die Verwendung der Lateralgeschwindigkeit und/oder des Schwimmwinkels ergibt sich ein Mehrnutzen, da bestehende Sensoriken verwendet werden können und somit keine zusätzlichen Entwicklungskosten und Sensorkosten entstehen. Vorteil hierbei ist, dass dabei bereits existierende Applikationen nachträglich mit dieser Funktion versehen werden können und dann die Performance der derzeitig in Serie befindlichen Systeme erhöht wird.

Erfindungsgemäß ist, dass die Vorrichtung die Lateralgeschwindigkeit und/oder den Schwimmwinkel in Abhängigkeit von einem Schleudervorgang verwendet. Dabei wird nunmehr der Schleudervorgang als zusätzliche Plausibilisierung eingesetzt, denn nur dann wird die Lateralgeschwindigkeit und/oder der Schwimmwinkel dazu verwendet, um beispielsweise die Schwellwerte einzustellen. Ein Schleudermanöver wird anhand von Sensorsignalen ermittelt, die die Fahrdynamikregelung untersucht. In der Fahrdynamikregelung sind bekannte Algorithmen vorgesehen, die ein Schleudermanöver erkennen. Dazu kann neben Beschleunigungswerten in den Raumrichtungen auch ein Gierratensensorsignal verwendet werden.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. des angegebenen Verfahrens zur Ansteuerung von Personenschutzmitteln bei einem Seitenaufprall möglich.

Weiterhin ist es vorteilhaft, dass zusätzlich die Richtung des Schleudervorgangs ermittelt wird. Dies wird auch anhand der Fahrdynamiksignale bestimmt.

Darüber hinaus ist es vorteilhaft, dass auch die Richtung des Aufpralls zur Plausibilisierung verwendet wird. Das heißt, nur in Abhängigkeit von der

Aufprallrichtung wird die Lateralgeschwindigkeit und/oder der Schwimmwinkel zu Beeinflussung der Schwellwerte für das Aufprallsignal verwendet. Die Aufprallrichtung kann einerseits aus der Lateralgeschwindigkeit bzw. dem Schwimmwinkel und andererseits aus dem Aufprallsignal extrahiert werden. Zeigen beide die gleiche Richtung an, dann ist die Plausibilisierung gelungen.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung
- Figur 2: ein Blockschaltbild und
- Figur 3: eine mögliche Beeinflussung der Schwellwerte durch die Lateralgeschwindigkeit bzw. den Schwimmwinkel.

### Beschreibung

Algorithmen zur Seitenaufprallsensierung werden über vordefinierte Schwellen eingestellt. Kommt es zu einer Seitenkollision ohne Lateraigeschwindigkeit, erfolgt die Auslösung durch die eingestellten unveränderten Schwellen, welche im Aufprallfall überschritten werden und eine Auslösung erzwingen.

Kommt es durch einen vorausgegangenen Vorgang zu einem seitlichen Driften mit Lateralgeschwindigkeit, so werden die Schwellen in Abhängigkeit von der Lateralgeschwindigkeit und/oder dem Schwimmwinkel verändert. Die Veränderung kann vorzugsweise ebenfalls über eine vordefinierte Funktion erfolgen und/oder aber durch stetige Schwellwerte, welche zu den bestehenden zeitlich veränderbaren Schwellwerten addiert oder subtrahiert werden. Dieser Einflussfaktor auf die Schwellwerte ist also eine Funktion in Abhängigkeit von der Lateralgeschwindigkeit und/oder des Schwimmwinkels. Zur Beeinflussung der Schwellwerte werden Gewichtungsfaktoren bestimmt. Die Gewichtungsfaktoren können in einem separaten Steuergerät, wie z. B. der Fahrdynamikregelung oder aber im zentralen Airbagsteuergerät bestimmt werden.

Eine Kommunikation über eine CAN-Bus-Schnittstelle sowie die gängigen in der Fahrzeugindustrie verwendeten Bussysteme können ebenfalls eingesetzt werden. Wie bereits eingangs erwähnt, kann die Quergeschwindigkeit geschätzt und/oder aber direkt gemessen werden. Die Quergeschwindigkeit bzw. Schwimmwinkel werden in einem separaten Verarbeitungsschritt zur Bestimmung der Gewichtungsfaktoren für die Schwellwerte heran gezogen. Die ermittelten Faktoren werden dem Auslösealgorithmus zur Verfügung gestellt, wenn diese als plausibel gekennzeichnet sind. Dies wird im Folgenden beschrieben:
Um eine Fehlfunktion bei derartigen direkten Eingriffen in die Sensibilität des Auslöseverhaltens zu vermeiden, werden weitere Größen verglichen. In einem ersten Schritt wird überprüft, ob ein Schleudervorgang voraus gegangen ist. Dies kann über einen zweiten Plausibilitätspfad für den Fahrdynamikteil erreicht werden. Dabei werden Größen, welche aus dem Fahrdynamikregelungssystem gewonnen und/oder gemessen werden, übermittelt. Andere Sensoren und/oder Steuergeräte können diese Informationen ebenfalls liefern. Die Plausibilisierung über den Vorgang kann eine einfache logische Verknüpfung sein, die die Richtung des Ausbrechvorgangs überprüft.

In einem zweiten Schritt werden die Richtung des Schleudervorgangs und die Aufprallrichtung überprüft. Hierzu werden die Vorzeichen in einer logischen Verknüpfung überprüft.

Beide Plausibilitätspfade liefern somit logische Wahrheitswerte, die in einer weiteren logischen Verknüpfung überprüft werden und im weiteren Auslösealgorithmus überprüft wird. Optional besteht die Möglichkeit, dass diese Plausibilisierung der Crashplausibilisierung zugeführt wird und dort eine globale Plausibilisierung vorgenommen wird. Anschließend kommt es zu Aktivierung der Rückhaltemittel wie z. B. einem pyrotechnischem Thorax-Airbag und/oder Curtain-Airbags sowie pyrotechnischer Gurtstraffer.

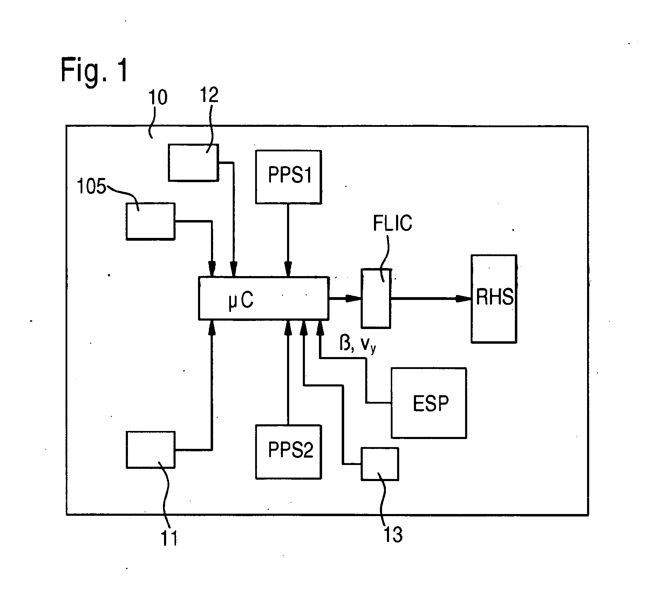

Figur 1 zeigt in einem Blockschaltbild die erfindungsgemäße Vorrichtung. Die erfindungsgemäße Vorrichtung weist hier eine umfangreiche Sensorik auf, die gegebenenfalls auch geringer ausfallen kann. Jeweils an den Seiten eines Fahrzeugs 10 ist eine Aufprallsensorik PPS1 und PPS 2 vorgesehen. Diese Aufprallsensorik ist derart konfiguriert, dass sie einen Seitenaufprall oder eine Seitenkollision leicht und schnell erkennen kann. Dafür bieten sich beispielsweise Druck-, Temperatur-, Körperschall- oder Beschleunigungssensoren an. Diese Aufprallsensorik PPS1 und PPS2 liefert ihre Signale an eine Auswerteschaltung, hier einen Mikrocontroller µC, der üblicher Weise zentral im Fahrzeug angeordnet ist. Es ist jedoch möglich, ihn auch Platz sparend an anderen Orten im Fahrzeug einzubauen. Darüber hinaus sind an dem Mikrocontroller µC Umfeldsensoriken 11 und 12 angeschlossen, die beispielsweise als Radar-, Ultraschall-, Infrarot- und/oder Lidarsensorik ausgebildet sind. Insbesondere bei einer Seitenkollision ist eine Umfeldsensorik von großem Vorteil, da bei einem Seitenaufprall die Knautschzone bekanntermaßen sehr gering ist und somit eine frühzeitige Erkennung eines Gefahrenpotentials von der Seite besonders hilfreich für den Schutz der Fahrzeuginsassen ist. Darüber hinaus ist an den Mikrocontroller µC eine Plausibilitätssensorik 13 angeschlossen, die auch auf der gegenüber liegenden Fahrzeugseite vorhanden sein kann. Diese Plausibilitätssensorik 13 stellt eine weitere Sensorik neben der Aufprallsensorik dar, die auch den Seitenaufprall frühzeitig registrieren soll. Diese Plausibilitätssensorik 13 ist für den Fall vorgesehen, dass die Aufprallsensoren PPS1 und PPS2 nicht korrekt funktionieren. Diese Plausibilitätssensorik 13 ist üblicher Weise ein Beschleunigungssensor oder auch als Sonderfall des Beschleunigungssensors ein Köiperschallsensor. Aber auch andere Sensorprinzipien wie ein Temperatursensor, ein Kontaktsensor usw. sind hier einsetzbar. Auch eine Insassensensorik IOS ist an den Mikrocontroller µC angeschlossen, um die entsprechenden Schutzmittel anzusteuern oder nicht. Erfindungsgemäß ist nun auch die Fahrdynamikregelung ESP an den Mikrocontroller µC, der sich üblicher Weise in einem Steuergerät zur Ansteuerung der Personenschutzmittel befindet, angeschlossen. Das Fahrdynamikregelungssteuergerät ESP liefert den Schwimmwinkel β und die Fahrzeugquergeschwindigkeit v_{y} direkt. Wie oben angeführt, kann die Lateralgeschwindigkeit v_{y} direkt mittels eines aufwendigen optischen Sensors oder indirekt über Beschleunigungsmessungen und/oder Gierratenmessungen bestimmt werden. Die Berechnung der Lateralgeschwindigkeit muss nicht notwendigerweise in einem Fahrdynamiksystem erfolgen, sondern kann auch durch Übermittlung der für die Berechnung notwendigen Größen (Längsgeschwindigkeit, Längs- und Querbeschleunigung, Gierrate) in einem separatem Steuergerät wie zum Beispiel einem Airbagsteuergerät erfolgen. Das gleiche gilt für den Schwimmwinkel β. Der Mikrocontroller µC verarbeitet all diese Signale und steuert damit eine Zündkreisansteuerung FLIC an, die dann einen Zündimpuls an die Personenschutzmittel RHS, wie Airbags, Gurtstraffer oder Überrollbügel sendet.

Notwendig für die Erfindung sind die Aufprallsensorik PPS1 und PPS2 sowie die Auswerteschaltung µC und die Fahrdynamikregelung ESP sowie die Personenschutzmitteln RHS.

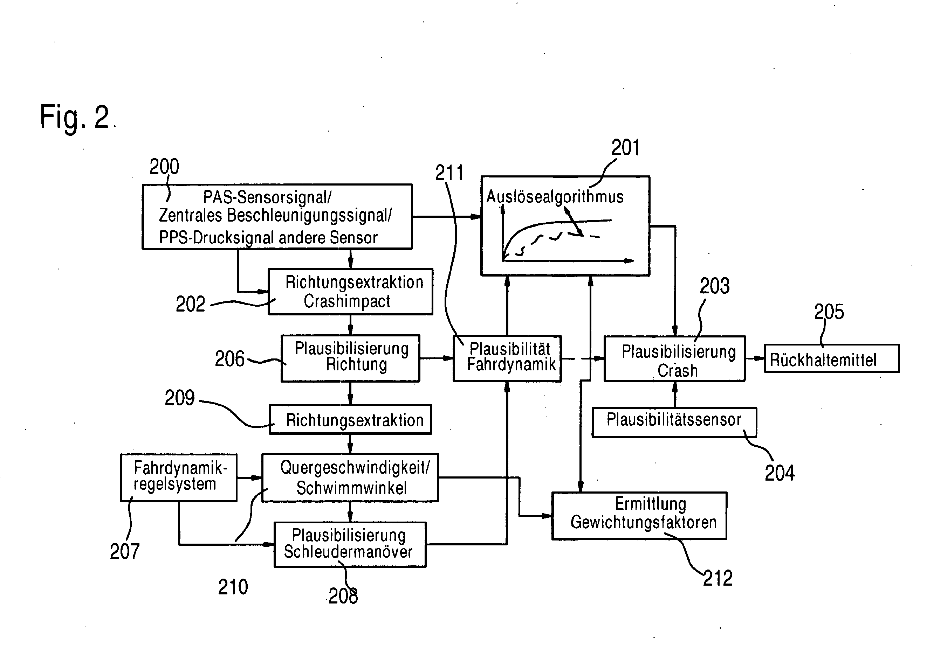

Im Blockdiagramm gemäß Figur 2 wird die Funktion der erfindungsgemäßen Vorrichtung bzw. der Ablauf des erfindungsgemäßen Verfahrens zur Ansteuerung von Personenschutzmitteln bei einem Seitenaufprall deutlich. Im Block 200 wird das Aufprallsignal der Aufprallsensoren PPS1 und PPS2 erzeugt. Daneben kann auch ein zentrales Beschleunigungssignal erzeugt werden. Dieses Signal geht zum einen in einen Auslösealgorithmus 201 und zum anderen wird anhand des Signals im Block 202 die Aufprallrichtung extrahiert. Im Auslösealgorithmus 201 wird das Aufprallsignal aus dem Block 200 mit einem Schwellwert verglichen. Dieser Schwellwert kann statisch oder dynamisch sein, er wird zumindest in Abhängigkeit von Fahrdynamikgrößen verändert. Wurde im Auslösealgorithmus 201 festgestellt, dass der Algorithmus, beispielsweise das integrierte Beschleunigungssignal, übertroffen wird, dann wird im Verfahrensschritt 203 geprüft, ob der Crash auch plausibel ist und zwar anhand des Signals eines Plausibilitätssensors 204, beispielsweise des Sensors 13 in Figur 1. Ist das der Fall, dann werden im Verfahrensschritt 205 die Personenschutzmittel RHS angesteuert. Erfindungsgemäß wird nun auch das Fahrdynamiksystem 207 in die Auswertung integriert. Dazu wird aus dem Fahrdynamiksystem die Quergeschwindigkeit und der Schwimmwinkel als Größen ermittelt oder aber in Block 208 berechnet. Anhand dieser Größen werden Gewichtungsfaktoren im Block 212 bestimmt, die zur Beeinflussung des Auslösealgorithmus 201 dienen und dabei vorzugsweise die Schwellwerte verändern. Aus der Quergeschwindigkeit bzw. dem Schwimmwinkel kann im Block 209 jedoch auch die Richtung extrahiert werden, mit dem sich das Fahrzeug bewegt. Aus der Aufprallrichtung und der Fahrzeugrichtung wird in Verfahrensschritt 206 eine Plausibilisierung der Richtung durchgeführt. War diese erfolgreich, dann wird in Verfahrensschritt 211 eine Plausibilität der Fahrdynamik durchgeführt und zwar insbesondere anhand eines Schleudermanövers in Block 210. Ist dies gelungen, dann wird der Crash von der Fahrdynamik als plausibel erkannt und dies dem Block 203 mitgeteilt. Wahlweise kann die im Verfahrensschritt 211 gewonnene Plausibilität nochmals im Auslösealgorithmus herangezogen werden, um die im Block 212 ermittelten Gewichtungsfaktoren zu plausibilisieren, so dass eine nicht erwünschte Absenkung der Schwellwerte vermieden wird.

Eine andere Art der Modifikation im Block 201 sieht vor, dass das Signal aus Block 200 über die Gewichtungsfaktoren von Block 212 direkt modifiziert wird, so dass bei fest eingestellten Schwellen eine frühe Überschreitung der Schwellwerte erreicht wird.

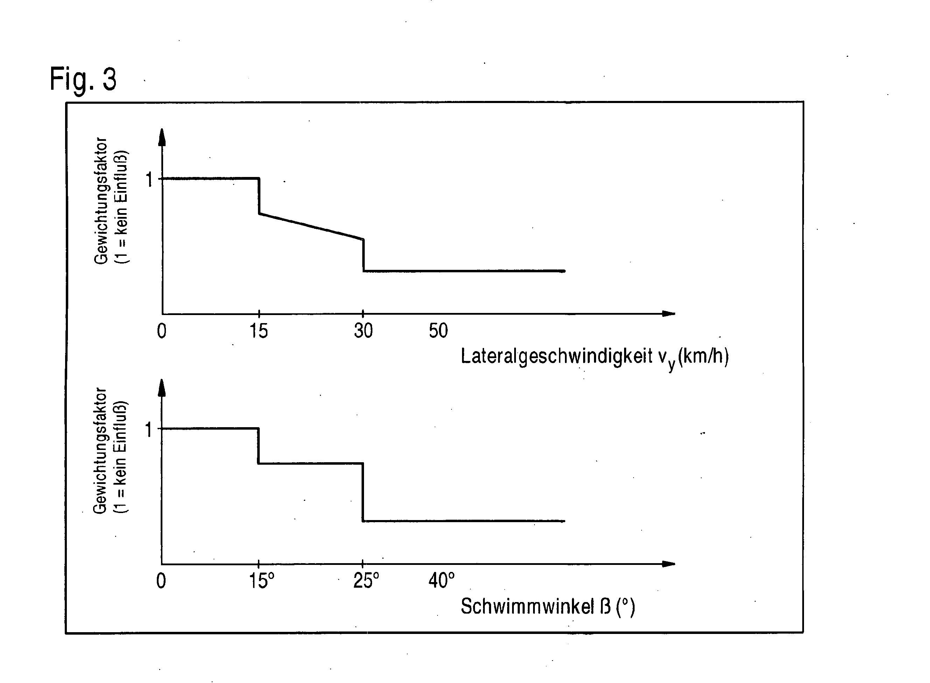

Figur 3 zeigt beispielhaft, wie der Schwellwert in Abhängigkeit von der Lateralgeschwindigkeit bzw. des Schwimmwinkels beeinflusst werden kann. Beim Wert 1 erfolgt keine Beeinflussung. Man sieht, dass bei höheren Geschwindigkeiten der Schwellwert mit einem Gewichtungsfaktor von <1 beeinflusst wird. Das bedeutet, je höher die Lateralgeschwindigkeit, desto niedriger ist der Auslöseschwellwert. Dies ist auch einzusehen, denn eine hohe Lateralgeschwindigkeit bedeutet eine hohe Seitwärtsdrift, die ein unübliches Verhalten eines Fahrzeugs darstellt und eine kritische Situation bedeutet. Entsprechendes gilt für den Schwimmwinkel, da bei immer größeren Winkeln der Schwellwert für das Aufprallsignal immer kleiner wird.

## Patentansprüche

1. Vorrichtung zur Ansteuerung von Personenschutzmitteln (RHS) bei einem Seitenaufprall, wobei die Vorrichtung derart konfiguriert ist,
dass die Vorrichtung:
- die Personenschutzmittel (RHS) in Abhängigkeit von einem Seitenaufprallsensoriksignal und zumindest einer der beiden Größen Lateralgeschwindigkeit (v_{y}) oder Schwimmwinkel (β) ansteuert,
- Schwellwerte zur Auslösung der Personenschutzmittel (RHS) mittels der Lateralgeschwindigkeit (v_{y}) und / oder des Schwimmwinkels (β) verändert,
**dadurch gekennzeichnet, dass**
die Vorrichtung derart konfiguriert ist, dass die Vorrichtung die Ansteuerung und die Veränderung bei Vorliegen eines Schleudervorgangs durchführt.

2. Vorrichtung nach Anspruch 1, **dadurch gekennzeichnet, dass** die Vorrichtung derart konfiguriert ist, dass die Vorrichtung die Lateralgeschwindigkeit (v_{y}) und/oder den Schwimmwinkel (β) in Abhängigkeit von einer Richtung des Schleudervorgangs verwendet.

3. Vorrichtung nach einem der Ansprüche 1 oder 2, **dadurch gekennzeichnet, dass** die Vorrichtung derart konfiguriert ist, dass die Vorrichtung die Lateralgeschwindigkeit (v_{y}) und/oder den Schwimmwinkel (β) in Abhängigkeit von einer Aufprallrichtung verwendet.

4. Verfahren zur Ansteuerung von Personenschutzmitteln (RHS) bei einem Seitenaufprall, wobei die Personenschutzmittel (RHS) in Abhängigkeit von einem Seitenaufprallsensoriksignal und
zumindest einer der beiden Größen Lateralgeschwindigkeit (v_{y}) oder Schwimmwinkel (β) angesteuert werden, wobei
die Schwellwerte zur Auslösung von Personenschutzmittel
mittels der Lateralgeschwindigkeit (v_{y}) und/oder des Schwimmwinkels (β) verändert werden,
**dadurch gekennzeichnet, dass**
die Ansteuerung und die Veränderung bei Vorliegen eines Schleudervorgangs
durchgeführt wird.

5. Verfahren nach Anspruch 4, **dadurch gekennzeichnet, dass** die Lateralgeschwindigkeit (v_{y}) und/oder der Schwimmwinkel (β) in Abhängigkeit von einer Richtung des Schleudervorgangs verwendet werden.

6. Verfahren nach einem der Ansprüche 4 oder 5, **dadurch gekennzeichnet, dass** die Lateralgeschwindigkeit (v_{y}) und/oder der Schwimmwinkel (β) in Abhängigkeit von einer Aufprallrichtung verwendet werden.

## Claims

1. Device for the actuation of personal protection means (RHS) in the event of a side impact, wherein the device is configured in such a way that the device:
- actuates the personal protection means (RHS) as a function of a side impact sensor signal and at least one of the two variables of the lateral speed (v_{y}) or attitude angle (β),
- changes threshold values for the purpose of triggering the personal protection means (RHS) by means of the lateral speed (v_{y}) and/or the attitude angle (β), **characterized in that**
the device is configured in such a way that the device carries out the actuation and the changing when a skidding process occurs.

2. Device according to Claim 1, **characterized in that** the device is configured in such a way that the device uses the lateral speed (v_{y}) and/or the attitude angle (β) as a function of a direction of the skidding process.

3. Device according to one of Claims 1 or 2, **characterized in that** the device is configured in such a way that the device uses the lateral speed (v_{y}) and/or the attitude angle (β) as a function of an impact direction.

4. Method for the actuation of personal protection means (RHS) in the event of a side impact, wherein the personal protection means (RHS) are actuated as a function of a side impact sensor signal and at least one of the two variables of the lateral speed (v_{y}) or attitude angle (β), wherein
the threshold values for the purpose of triggering personal protection means are changed by means of the lateral speed (v_{y}) and/or the attitude angle (β), **characterized in that**
the actuation and the changing are carried out when a skidding process occurs.

5. Method according to Claim 4, **characterized in that** the lateral speed (v_{y}) and/or the attitude angle (β) are used as a function of a direction of the skidding process.

6. Method according to one of Claims 4 or 5, **characterized in that** the lateral speed (v_{y}) and/or the attitude angle (β) are used as a function of an impact direction.

## Revendications

1. Dispositif pour commander des moyens de protection de personnes (RHS) dans le cas d'une collision latérale, le dispositif étant configuré de telle sorte que le dispositif :
- commande les moyens de protection de personnes (RHS) en fonction d'un signal de détection de collision latérale et au moins de l'une des deux grandeurs vitesse latérale (v_{y}) ou angle de flottement (β),
- modifie les valeurs de seuil pour le déclenchement des moyens de protection de personnes (RHS) au moyen de la vitesse latérale (v_{y}) et/ou de l'angle de flottement (β),
**caractérisé en ce que**
le dispositif est configuré de telle sorte que le dispositif exécute la commande et la modification en présence d'un phénomène de catapultage.

2. Dispositif selon la revendication 1, **caractérisé en ce que** le dispositif est configuré de telle sorte que le dispositif utilise la vitesse latérale (v_{y}) et/ou l'angle de flottement (β) en fonction d'une direction du phénomène de catapultage.

3. Dispositif selon l'une des revendications 1 ou 2, **caractérisé en ce que** le dispositif est configuré de telle sorte que le dispositif utilise la vitesse latérale (v_{y}) et/ou l'angle de flottement (β) en fonction d'un sens de collision.

4. Procédé pour commander des moyens de protection de personnes (RHS) dans le cas d'une collision latérale, selon lequel les moyens de protection de personnes (RHS) sont commandés en fonction d'un signal de détection de collision latérale et au moins de l'une des deux grandeurs vitesse latérale (v_{y}) ou angle de flottement (β), selon lequel
les valeurs de seuil pour le déclenchement des moyens de protection de personnes sont modifiées au moyen de la vitesse latérale (v_{y}) et/ou de l'angle de flottement (β), **caractérisé en ce que**
la commande et la modification sont exécutées en présence d'un phénomène de catapultage.

5. Procédé selon la revendication 4, **caractérisé en ce que** la vitesse latérale (v_{y}) et/ou l'angle de flottement (β) sont utilisés en fonction d'une direction du phénomène de catapultage.

6. Procédé selon l'une des revendications 4 ou 5, **caractérisé en ce que** la vitesse latérale (v_{y}) et/ou l'angle de flottement (β) sont utilisés en fonction d'un sens de collision.
